Europäisches Patentamt

European Patent Office

Office européen des brevets

(19)

(11) Veröffentlichungsnummer: **0 041 138**
**A1**

(12) # EUROPÄISCHE PATENTANMELDUNG

(21) Anmeldenummer: **81103460.2**

(51) Int. Cl.³: **G 11 B 5/012**
**G 11 B 5/54**

(22) Anmeldetag: **07.05.81**

(30) Priorität: **02.06.80 DE 3020826**

(43) Veröffentlichungstag der Anmeldung:
**09.12.81 Patentblatt 81/49**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Hack, Joachim**
**Pfarrer-Friedrich-Strasse 34**
**D-6700 Ludwigshafen(DE)**

(72) Erfinder: **Brotzler, Roland**
**Langstrasse 34**
**D-6701 Hochdorf-Assenheim(DE)**

(72) Erfinder: **Felleisen, Peter**
**Sedanstrasse 21**
**D-6840 Lampertheim(DE)**

(54) **Magnetplattenspeicher.**

(57) Magnetplattenspeicher mit einer oder mehreren auf einer drehbaren Welle angeordneten Magnetplatten (11), auf deren datenspeichernde Oberfläche (n) mit einem oder mehreren Magnetköpfen (10) spurweise aufgezeichnet und abgetastet wird, wobei die auf einer Spur aufgezeichneten Datenflußwechsel von der Innenspur (6) zur Außenspur (7) unter einem veränderlichen Winkel bezüglich der Spurrichtung angeordnet sind, wobei die Winkelveränderung von innen nach außen≥15°, bzw.≥20° beträgt und der Magnetkopf (10) durch den Kopfschlitten (9) tangential zur Innenspur (6) bewegt wird.

FIG.1

EP 0 041 138 A1

Magnetplattenspeicher

Die Erfindung betrifft einen Magnetplattenspeicher mit einer oder mehreren auf einer drehbaren Welle angeordneten Magnetplatten, auf deren datenspeichernde Oberfläche(n) mit einem oder mehreren Magnetköpfen spurweise aufgezeichnet und/oder abgetastet wird.

Bei bekannten Magnetplattenspeichern dieser Art werden Datenspuren gleicher Breite konzentrisch zum Mittelpunkt und die einzelnen Flußwechsel radial aufgezeichnet. Da durch die externe Datenverarbeitung eine konstante Bitrate beim Schreiben und Lesen gefordert wird, entstehen bei gleichbleibender Drehzahl für unterschiedliche Spurradien voneinander abweichende Abstände der magnetischen Flußwechsel. Diese Aufzeichnung wird erzielt entweder durch radiales Positionieren eines Kopfschlittens um gleiche Schritte oder durch Schwenken eines Drehpositionierers um gleiche Winkel. Beim Drehpositionierer entstehen geringfügige Winkelabweichungen der Flußwechselübergänge zum jeweiligen Spurradius, die unter 15° liegen.

Bei der beschriebenen herkömmlichen Beschriftungsmethode eines Plattenspeichers entstehen also unterschiedliche Flußwechselabstände auf den Innen- und Außenspuren, da bei gleicher Datenrate die Plattenrelativgeschwindigkeit - bei gleicher Drehzahl - radienabhängig ist. Dies führt in der Praxis zu einer im Vergleich zur Aufzeichnung auf den Innenspuren erhöhten Lesespannung auf den Außenspuren. Dieser Lesespannungsunterschied erfordert eine zusätzliche Dynamik des Leseverstärkers, die aufgrund der kleinen Lesesignale auf den Innenspuren nur mit Zusatzaufwand erreichbar ist. Die maximale Informationsdichte ist durch die Aufzeichnungsparameter der Innenspur

Spr/BL

vorgegeben. Durch die geringe Aufzeichnungsdichte auf allen weiter außen liegenden Spuren, wird die mögliche Speicherkapazität nicht voll ausgenutzt.

In der DE-OS 17 74 486 wird die Aufteilung der Plattenoberfläche in verschiedene Bereiche mit unterschiedlicher Aufzeichnungsfrequenz zur Beseitigung des oben genannten Nachteils angegeben. Eine unterschiedliche Datenverarbeitungsfrequenz bedeutet jedoch erheblichen Datensteueraufwand und ist somit neben der immer noch nicht optimalen Datenspeicherkapazitäts-Ausnutzung nicht vorteilhaft. Weiter ist es möglich, die Plattenoberfläche in Bereiche mit unterschiedlicher Spurbreite aufzuteilen. Hierfür sind jedoch Schreib-Lese-Köpfe mit unterschiedlicher Spurbreite erforderlich, so daß pro Oberfläche mehrere Köpfe eingesetzt werden müssen.

Aufgabe der vorliegenden Erfindung ist es, einen weitgehend konstanten wirksamen Flußwechselabstand und/oder gleiche Lesespannungen über alle Spuren zu erzeugen.

Diese Aufgabe wird erfindungsgemäß dadurch gelöst, daß die auf einer Spur aufgezeichneten Datenflußwechsel von der Innenspur hin zur Außenspur unter einem veränderlichen Winkel bezüglich der Spurrichtung angeordnet sind, wobei die Winkelveränderung von innen nach außen $\geq 15^\circ$, vorzugsweise $\geq 20^\circ$ beträgt.

Eine besonders einfache Realisierung der variablen Aufzeichnungswinkel stellt die zur Innenspur tangentiale Verschiebung des Kopfschlittens mit dem Magnetkopf dar.

Die durch die Erfindung erzielten Vorteile liegen darin, daß jede Spur mit der für sie maximal möglichen Speicherdichte beschrieben wird und bei gleichbleibendem Magnet- kopfspalt durch die Kopfschrägstellung eine nach außen abnehmende Spurbreite entsteht. Hierdurch können mehr Spuren auf der Platte aufgezeichnet werden, was einer Kapazitätserhöhung entspricht. Die über alle Spuren weitgehend gleichbleibende Lesespannung erlaubt den Verzicht auf zusätzlich geregelte Leseverstärker.

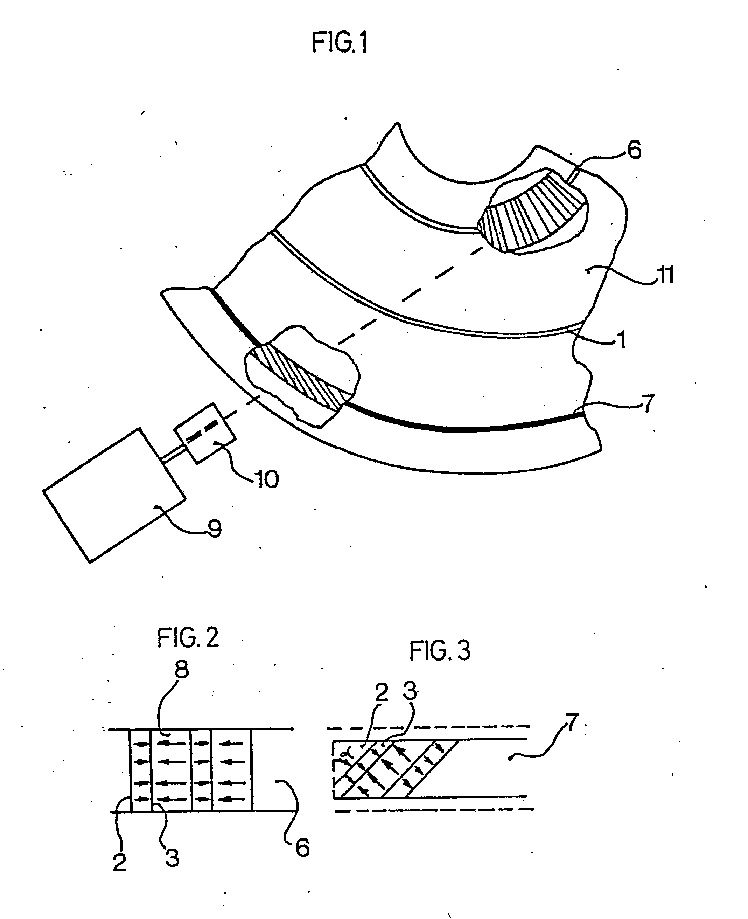

Die Erfindung wird anhand der Figuren 1 und 2 erläutert.

Figur 1 zeigt die Innenspur mit senkrecht zur Spurrichtung verlaufender Flußwechselrichtung und die auf der Außenspur um einen Winkel $\alpha$ gedrehten Flußwechsel, sowie den Kopfschlitten mit dem Magnetkopf.

Die Figuren 2 und 3 zeigen Ausschnitte aus der Innen- und Außenspur mit der Richtung der aufgezeichneten Flußwechsel.

Bei Magnetplattenspeichern werden der oder die Magnetköpfe 10 für eine Plattenseite gemeinsam in Schritten über die Magnetplatte 11 bewegt, so daß ringförmige in sich geschlossene Aufzeichnungsspuren 1, 6, 7 entstehen. Wird mit konstantem Takt aufgezeichnet, ergibt sich aus geometrischen Gründen auf der Innenspur 6 bei radialem Verlauf der Flußwechsel 2, 3 die größte Informations-Speicherdichte. Die Flußwechsel werden mit einem minimalen Abstand 8 und einer durch das Kopfsystem vorgegebenen Spurbreite aufgezeichnet. Montiert man den Magnetkopf 10 mit seinem Kopfspalt genau radial zur Innenspur 6 und bewegt man weiterhin den Magnetkopf 10 etwa radial nach außen, so ergibt sich auf der Außenspur 7 bei gleichem Schreibtakt ein größerer Abstand der Flußwechsel bei gleicher Spurbreite. Um diesen unnötigerweise vergrößerten Abstand zur Informationskapazitäts-Vergrößerung auszunützen, wird der Kopfspalt, wie in Figur 1 verdeutlicht, zu den Außenspuren hin immer stärker gedreht. Es entsteht dann bei gleichem Kopfspaltgeometrie eine in Spurrichtung schmalere Spur mit einem in Magnetfeldrichtung - durch Pfeile gekennzeichnet - reduzierten Abstand der Flußwechsel. In Figur 3 ist jeder Flußwechsel um den Winkel $\alpha$ gegenüber dem gedachten Spurradius gedreht. Diese Drehung kann einer beliebigen Kurve über alle Spuren folgen, indem man den Kopfschlitten 9 zweidimensional beweglich realisiert.

Patentansprüche

1. Magnetplattenspeicher mit einer oder mehreren auf einer drehbaren Welle angeordneten Magnetplatten, auf deren datenspeichernde Oberfläche(n) mit einem oder mehreren Magnetköpfen spurweise aufgezeichnet und/oder abgetastet wird, dadurch gekennzeichnet, daß die auf einer Spur (1) aufgezeichneten Datenflußwechsel (2, 3) von der Innenspur (6) hin zur Außenspur (7) unter einem veränderlichen Winkel bezüglich der Spurrichtung angeordnet sind, wobei die Winkelveränderung von innen nach außen $\geq 15^{\circ}$, vorzugsweise $\geq 20^{\circ}$ beträgt.

2. Magnetplattenspeicher nach Anspruch 1, dadurch gekennzeichnet, daß der Magnetkopf (10) durch den Kopfschlitten (9) tangential zur Innenspur (6) bewegt wird.

Zeichn.

FIG.1

FIG.2

FIG.3

0041138

Europäisches
Patentamt

**EUROPÄISCHER RECHERCHENBERICHT**

Nummer der Anmeldung

EP 81 10 3460.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 223 420 (PHILIPS) <br> * Ansprüche 1, 3; Spalte 1, Zeilen 37 bis 52; Spalte 2, Zeilen 24 bis 40 * <br><br> -- | 1,2 |
| P,A | DD - A - 143 971 (VEB ELEKTROTECHNIK) <br> * Anspruch 1; Seite 2 * <br><br> -- | |
| D,A | DE - A - 1 774 486 (EX-CELL-O CORP.) <br> * Seite 1, Absatz 2 bis Seite 2, Absatz 1 * <br><br> ---- | |

**KLASSIFIKATION DER ANMELDUNG (Int. Cl.³)**

G 11 B 5/012
G 11 B 5/54

**RECHERCHIERTE SACHGEBIETE (Int. Cl.³)**

G 11 B 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

|X| Der vorliegende Recherchenbericht wurde für alle Patentansprüche erstellt.

| Recherchenort | Abschlußdatum der Recherche | Prüfer |
|---|---|---|
| Berlin | 26-08-1981 | LEITHÄUSER |

EPA form 1503.1 06.78